(19) Europäisches Patentamt / European Patent Office / Office européen des brevets

(11) **EP 4 231 375 A1**

(12) **EUROPEAN PATENT APPLICATION**
published in accordance with Art. 153(4) EPC

(43) Date of publication:
**23.08.2023 Bulletin 2023/34**

(21) Application number: **21879849.4**

(22) Date of filing: **22.09.2021**

(51) International Patent Classification (IPC):
**H01M 4/131** (2010.01)   **H01M 4/36** (2006.01)

(52) Cooperative Patent Classification (CPC):
**H01M 4/131; H01M 4/36;** Y02E 60/10

(86) International application number:
**PCT/JP2021/034882**

(87) International publication number:
**WO 2022/080108 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.10.2020 JP 2020172825**

(71) Applicants:
• **SHINSHU UNIVERSITY**
  **Matsumoto City, Nagano, 390-8621 (JP)**
• **Toray Engineering Co., Ltd.**
  **Tokyo 103-0028 (JP)**

(72) Inventors:
• **TESHIMA, Katsuya**
  **Nagano City, Nagano 3808553 (JP)**
• **ZETTSU, Nobuyuki**
  **Nagano City, Nagano 3808553 (JP)**
• **YAMADA, Tetsuya**
  **Nagano City, Nagano 3808553 (JP)**
• **SHISHINO, Kazuyuki**
  **Nagano City, Nagano 3808553 (JP)**

(74) Representative: **BRP Renaud & Partner mbB
Rechtsanwälte Patentanwälte
Steuerberater
Königstraße 28
70173 Stuttgart (DE)**

(54) **LITHIUM-ION SECONDARY CELL AND POSITIVE ELECTRODE OF SAME**

(57)    A positive electrode according to the present invention is a positive electrode of a lithium ion secondary battery in which a coating film containing a positive electrode active material is pressed against a surface of a positive electrode base material, and the positive electrode active material is a mixture of a first active material containing single particles of lithium composite oxide and a second active material containing secondary particles which are aggregated single particles of lithium composite oxide.

FIG.4

X1,000    10μm

X5,000    5μm

EP 4 231 375 A1

**Description**

TECHNICAL FIELD

The present invention relates to a lithium ion secondary battery and a positive electrode therefor.

BACKGROUND ART

A lithium ion secondary battery has a high energy density, and has been broadly used as a power source for a mobile electronic device such as a mobile phone or a laptop personal computer. Moreover, the lithium ion secondary battery is high in an operating voltage, and therefore, use as a power source for a hybrid vehicle or an electric vehicle has been recently developed. Thus, there has been a demand for a higher capacity.

Generally, the lithium ion secondary battery is configured such that a positive electrode including, on a surface of a positive electrode current collector, a positive electrode active material layer containing a positive electrode active material and a negative electrode including, on a surface of a negative electrode current collector, a negative electrode active material layer containing a negative electrode active material are connected to each other through a non-aqueous electrolyte. The performance of the lithium ion secondary battery greatly depends on the composition and structure of the positive electrode active material in the positive electrode. Patent Document 1 (Japanese Unexamined Patent Publication No. 2006-228733) describes that a positive electrode active material containing particles with a relatively-great particle size and a positive electrode active material containing particles with a relatively-small particle size are mixed to densely form the particles. With this configuration, the density of the positive electrode active material is improved, and battery performance is improved.

CITATION LIST

PATENT DOCUMENT

PATENT DOCUMENT 1: Japanese Unexamined Patent Publication No. 2006-228733
PATENT DOCUMENT 2: Japanese Unexamined Patent Publication No. 2013-065468

SUMMARY OF THE INVENTION

TECHNICAL PROBLEM

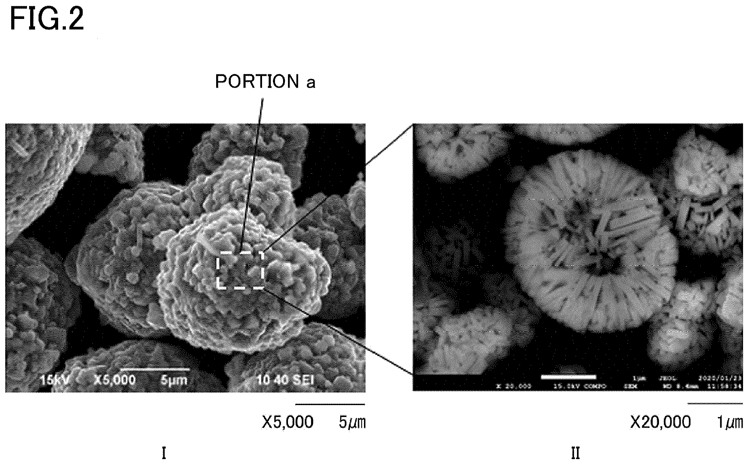

However, the positive electrode active material of the typical lithium ion secondary battery contains secondary particles which are aggregated single particles, regardless of a particle size. In the secondary particle, a space (a void) is formed as shown in FIG. 2-II. Thus, even if the density of the secondary particle is improved, the density of the positive electrode active material is not actually sufficiently improved, leading to a problem that it is difficult to achieve sufficient battery performance.

When the positive electrode active material layer is formed on the surface of the positive electrode current collector, a coating film containing the positive electrode active material and formed on a surface of a positive electrode base material which is the positive electrode current collector is pressed. However, the positive electrode active material containing the secondary particles has a problem that the particles are easily deformed or cracked due to a pressure and the battery performance is degraded accordingly. On this point, Patent Document 2 (Japanese Unexamined Patent Publication No. 2013-065468) describes that in order to protect particles from a pressure, the particle sizes of great- and small-diameter particles are adjusted such that the small-diameter particles easily enter a clearance among the great-diameter particles. However, in this case, the small-diameter particles are locally concentrated and are less likely to be dispersed, leading to a problem that it is difficult to achieve sufficient battery performance.

SOLUTION TO THE PROBLEM

The present invention has been made in view of the above-described situation, and an object thereof is to provide a lithium ion secondary battery and a positive electrode therefor so that excellent battery performance can be achieved by a higher density of the positive electrode active material and degradation of battery performance can be prevented even for a predetermined pressure by an improved press resistance.

The present invention solves the above-described problems by a solution described below as one embodiment.

The positive electrode according to the present invention is a positive electrode of a lithium ion secondary battery in which a coating film containing a positive electrode active material is pressed against a surface of a positive electrode base material, and the positive electrode active material is a mixture of a first active material containing single particles of lithium composite oxide and a second active material containing secondary particles which are aggregated single particles of lithium composite oxide.

According to this configuration, in the coating film, a space among particles of the second active material may be filled with the first active material. Thus, the space among the secondary particles is filled with the single particles having no void so that the density of the positive electrode active material can be increased. Moreover, the single particles harder than the secondary particle can be present around the secondary particles to bind the secondary particles to each other, and the damage of the secondary particle due to a pressure, such as deformation or cracking, can be reduced. Thus, the press resistance of the coating film can be improved.

In the coating film, the first active material may be dispersed and scattered across the entire coating film, and be interposed among the particles of the second active material such that the particles of the second active material are bound to each other through the first active material. Thus, the area of contact among the particles through the single particles can be increased, and a conduction path for lithium ions and free electrons can be increased in number.

As a result of dispersion of the first active material, a binder and/or a conductive assistant in the coating film may be interposed among particles of the positive electrode active material such that the particles of the positive electrode active material are bound to each other through the binder and/or the conductive assistant. Thus, the conduction path for the lithium ions and the free electrons can be branched into many paths among the particles, and excellent battery performance can be achieved by use of the positive electrode.

Here, the single particle is preferably a single crystal. In this case, the single crystal has a stable structure and a sufficient hardness, and therefore, a higher density of the positive electrode active material and an improved press resistance of the coating film can be more reliably achieved.

The single particle is preferably a crystal synthesized by a flux method. The crystal synthesized by the flux method contains single crystal particles, each of which is sufficiently grown. Thus, the single crystal can be used as the single particle forming the first active material. According to the flux method, the particle size of the crystal particle to be generated can be relatively easily controlled, and therefore, a positive electrode active material mixed with single particles (the first active material) having an optimal particle size according to the particle size of the secondary particle (the second active material) can be obtained.

The average particle size of the first active material is preferably smaller than the average particle size of the second active material. With this configuration, the space among the particles of the second active material is easily filled with the first active material, and the space among the secondary particles is filled with the single particles having no void. Thus, the density of the positive electrode active material can be increased.

The standard deviation of the particle size of the single particle (the first active material) is smaller than the standard deviation of the particle size of the secondary particle (the second active material). With this configuration, the single particles more easily enter the clearance among the secondary particles. As a result, the positive electrode active material in which the secondary particles and the single particles are more densely mixed with each other can be obtained, and therefore, a higher density of the positive electrode active material and an improved press resistance of the coating film can be more reliably achieved.

Another positive electrode according to the present invention is a positive electrode of a lithium ion secondary battery in which a coating film containing a positive electrode active material is pressed against a surface of a positive electrode base material. The positive electrode active material is a mixture of a first active material containing a single crystal of lithium composite oxide having a relatively-small particle size and a second active material containing a single crystal of lithium composite oxide having a relatively-great particle size, and in the coating film, a space among particles of the second active material is filled with the first active material.

According to this configuration, the positive electrode active material contains only the densely-formed single crystal, and the crystal particles having the different sizes are mixed such that the percentages of these crystal particles in the space are increased. Thus, the density of the positive electrode active material can be significantly increased. Moreover, the positive electrode active material contains only the stable and hard single crystal so that the press resistance of the coating film can be significantly improved.

The lithium ion secondary battery according to the present invention is a battery having the above-described positive electrode.

ADVANTAGES OF THE INVENTION

According to the present invention, the density of the positive electrode active material can be increased, and excellent battery performance can be achieved. Moreover, the battery can be provided, which is configured so that the press resistance of the positive electrode can be improved and degradation of the battery performance can be prevented even for a predetermined pressure. As a result, the small and light lithium ion secondary battery can be provided with excellent battery performance.

BRIEF DESCRIPTION OF THE DRAWINGS

[FIG. 1] FIG. 1 shows SEM photographs of NCM single particles (an NCM crystal synthesized by a flux method).
[FIG. 2] FIG. 2 shows SEM photographs of NCM secondary particles.
[FIG. 3] FIG. 3 shows SEM photographs of a coating film of a positive electrode active material containing NCM secondary particles according to a typical example.
[FIG. 4] FIG. 4 shows SEM photographs of a coating film of a positive electrode active material which is a mixture of NCM secondary particles and NCM single particles (an NCM crystal synthesized by the flux method) according to a first embodiment of the present invention.
[FIG. 5] FIG. 5 shows SEM photographs of a coating film of a positive electrode active material which is a mixture of NCM secondary particles and LCO single particles (an LCO crystal synthesized by the flux method) according to the first embodiment of the present invention.
[FIG. 6] FIG. 6 shows SEM photographs of a coating film of a positive electrode active material which is a mixture of a small-diameter NCM crystal and a great-diameter NCM crystal synthesized by the flux method according to a second embodiment of the present invention.
[FIG. 7] FIG. 7 shows SEM photographs of coating films of positive electrode active materials different from each other in a mixing ratio of NCM secondary particles and NCM single particles (an NCM crystal synthesized by the flux method).
[FIG. 8] FIG. 8 shows graphs of the capacity densities of coating films of positive electrode active materials different from each other in a mixing ratio of NCM secondary particles and NCM single particles (an NCM crystal synthesized by the flux method).
[FIG. 9] FIG. 9 shows SEM photographs of the section of a coating film of a positive electrode active material containing NCM secondary particles.
[FIG. 10] FIG. 10 shows SEM photographs of the section of a coating film of a positive electrode active material which is a mixture of NCM secondary particles and NCM single particles (an NCM crystal synthesized by the flux method).
[FIG. 11] FIG. 11 shows a cutaway perspective view a lithium ion secondary battery for describing a configuration example of a lithium ion secondary battery according to the present invention.
[FIG. 12] FIG. 12 shows a view for describing an example of the set particle size of each particle (each crystal particle) upon mixing of a first active material and a second active material.

DESCRIPTION OF EMBODIMENTS

[Positive Electrode]

(First Embodiment)

A positive electrode according to a first embodiment of the present invention is a positive electrode of a lithium ion secondary battery in which a coating film containing a positive electrode active material is pressed against a surface of a positive electrode base material, and is characterized in that the positive electrode active material is a mixture of a first active material containing single particles of lithium composite oxide and a second active material containing secondary particles which are aggregated single particles of lithium composite oxide. Hereinafter, detailed description will be made with reference to the drawings.

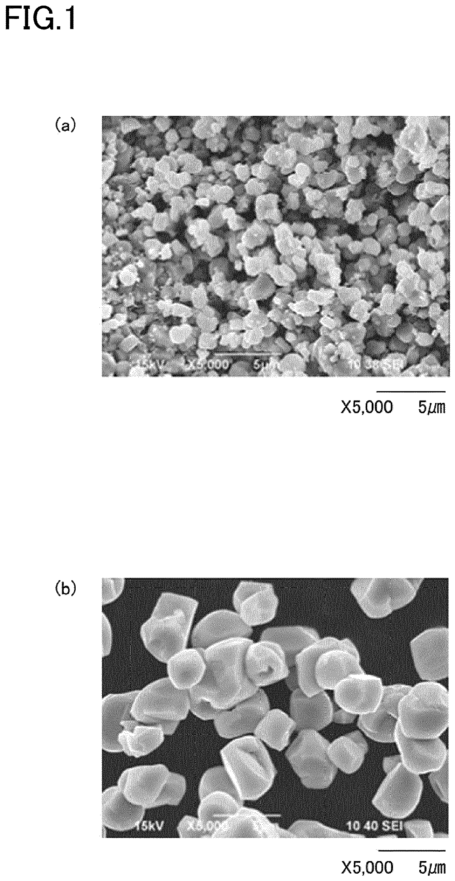

FIG. 1 shows SEM photographs of NCM single particles (NCM crystal particles synthesized by a flux method). FIGS. 1(a) and 1(b) show two types of NCM crystals different from each other in a particle size (a magnification is 5000X in either case). FIG. 2 shows SEM photographs of NCM secondary particles. In FIG. 2, FIG. 2-II shows an enlarged photograph of the section of a portion a of FIG. 2-I (a magnification is 5000X in I and 20000X in II).

First, the positive electrode according to the present embodiment is configured such that the coating film containing the positive electrode active material is pressed against the surface of the positive electrode base material. The positive electrode is configured such that a positive electrode active material layer containing the positive electrode active material is formed on a surface of a positive electrode current collector, and the above-described positive electrode base material is equivalent to the positive electrode current collector and the above-described coating film is equivalent to the positive electrode active material layer. The coating film (the positive electrode active material layer) may be formed on one surface of the positive electrode base material (the positive electrode current collector) or be formed on both surfaces.

Here, a method for manufacturing the positive electrode will be briefly described. First, the positive electrode active material is dispersed, together with a binder (an adhesive), a conductive assistant, etc., in a solvent. Subsequently, the resultant fluid dispersion is applied to the surface of the positive electrode base material, and the solvent is volatilized by drying. In this manner, the coating film containing the positive electrode active material is formed on the surface of the positive electrode base material. Further, in order to, e.g., increase the density of the positive electrode active material, the formed coating film is pressed into the positive electrode.

The binder to be used may include, but not limited to, PVDF and EPDM, for example. The conductive assistant to be used may include, but not limited to, carbon black such as acetylene black and ketjen black, for example. Normally, an organic solvent is used as the solvent in which the binder is dissolved, and the solvent to be used may include, but not limited to, NMP, dimethylformamide, and dimethyl acetamide, for example. The positive electrode base material to be used may include, but not limited to, foil and nets of aluminum and stainless steel, for example.

For dispersing the positive electrode active material etc. in the solvent, a well-known device such as a planetary mixer may be used. For pressing the coating film, a well-known device such as a roll press device may be used. Note that a press method is not limited to that by rolling. The manufacturing method is not particularly limited as long as the positive electrode according to the present embodiment can be obtained.

Next, it is characterized that the positive electrode active material according to the present embodiment is the mixture of the first active material and the second active material. Any of the first active material and the second active material is lithium composite oxide. Specifically, any of the first active material and the second active material may be lithium composite oxide containing, as constituent elements, an Li element and one or more types of transition metal elements, such as lithium cobalt oxide (LCO ($LiCoO_2$)), lithium nickel oxide (LNO ($LiNiO_2$)), lithium manganese oxide (LMO ($LiMnO_2$)), lithium ferro-phosphate (LFP ($LiFePO_4$)), NCM-based oxide ($Li(Ni-Co-Mn)O_2$), and NCA-based oxide ($Li(Ni-Co-Al)O_2$). The first active material and the second active material may have the same composition or different compositions. In a case where the first active material and the second active material have the same composition, the first active material and the second active material may have the same element distribution or different element distributions.

The first active material contains the single particles (see FIG. 1). The single particle described herein means a primary particle, which is a non-aggregated elementary particle, as compared to the later-described secondary particle. Note that the first active material may contain an impurity (e.g., a slight amount of aggregated single particles) to such an extent that the object and advantageous effects of the present invention are not influenced.

As the single particles forming the first active material, a single crystal is preferably used. The single crystal is densely formed with a stable structure and a sufficient hardness and without a space (a void) which is formed among the later-described secondary particles.

As the above-described single particle, a crystal synthesized by the flux method is more preferably used. The flux method is crystal growth using an inorganic compound or a metal solvent (a flux), and a crystal material is dissolved in the molten flux and the solution is crystallized using, as drive force, supersaturation by cooling of the solution.

As one example, in a case where a lithium composite oxide crystal is deposited by the flux method, oxide, carbonate, nitrate, etc. containing constituent elements (e.g., Li, Co, Ni, Mn, and Al) of a target crystal may be used as element sources (the crystal material), whereas carbonate, nitrate, chloride, oxide, etc. containing alkali metal or alkali earth metal may be used as the flux. Note that plural types of compounds may be used as one element source or a single type of compound may be used as a plurality of element sources. Plural types of compounds may be used as the flux. A compound containing an Li element which is alkali metal may be used as both the Li source and the flux.

Specific steps of the flux method will be described. First, a mixture of each element source and the flux at a predetermined molar ratio is injected into a crucible, and the flux is melted by heating of the crucible in a heating furnace. Subsequently, the crucible is cooled after having been held at a predetermined temperature, and in this manner, target lithium composite oxide is deposited in the molten flux and a crystal grows accordingly. Subsequently, the crucible cooled to around a room temperature is taken out of the heating furnace, and the remaining flux is removed by, e.g., dipping of the crucible in hot water. In this manner, a single crystal of lithium composite oxide can be obtained.

The crystal deposited and synthesized by the flux method as described above contains single crystal particles, each of which is sufficiently grown. Thus, the crystal synthesized by the flux method is used as the single particles of the first active material so that the first active material can contain the single crystal, each particle of which is sufficiently crystallized. As shown in FIGS. 1(a) and 1(b), the particle size of generated crystal particles can be relatively easily controlled by a change in a condition, such as a temperature or a concentration, according to the flux method, and therefore, lithium composite oxide containing single crystal particles having a required particle size can be obtained. Thus, a positive electrode active material mixed with single particles (the first active material) having an optimal particle size according to the particle size of the secondary particle (the second active material) can be obtained.

As compared to the above-described first active material, the second active material contains the secondary particles which are the aggregated single particles (see FIG. 2). That is, each particle forming the second active material is not one crystallized, but one formed of a plurality of aggregated particles. Note that the second active material may contain an impurity (e.g., the primary particles which are the non-aggregated elementary particles not forming the secondary particles) to such an extent that the object and advantageous effects of the present invention are not influenced.

The secondary particles of lithium composite oxide may be obtained, for example, by a well-known method described as an example in Patent Document 2 (Japanese Unexamined Patent Publication No. 2013-065468). Specifically, a precursor made of hydroxide or oxide of transition metal and a lithium-based compound are mixed at a predetermined ratio and are burnt. In this manner, the secondary particles can be obtained.

Note that the secondary particle is the aggregated single particles and the space (the void) as shown in FIG. 2-II is formed in the secondary particle. Thus, the particle is easily damaged, such as deformed or cracked, by a pressure, and has a relatively-lower press resistance. On the other hand, the single particle is the primary particle which is the non-aggregated elementary particle, and is densely formed with no void as shown in FIG. 1. Thus, the single particle is harder than the secondary particle, and has a relatively-high press resistance.

Here, it is more specifically characterized that the positive electrode active material, which is the mixture of the first active material and the second active material, according to the present embodiment is the mixture of the first active material containing the single particles having a relatively-small average particle size and the second active material containing the secondary particles having a relatively-great average particle size. Note that in some cases, a relatively-small particle size will be hereinafter merely referred to as "small(er)" or "small(er) diameter" and a relatively-great particle size will be hereinafter merely referred to as "great(er)" or "great(er) diameter."

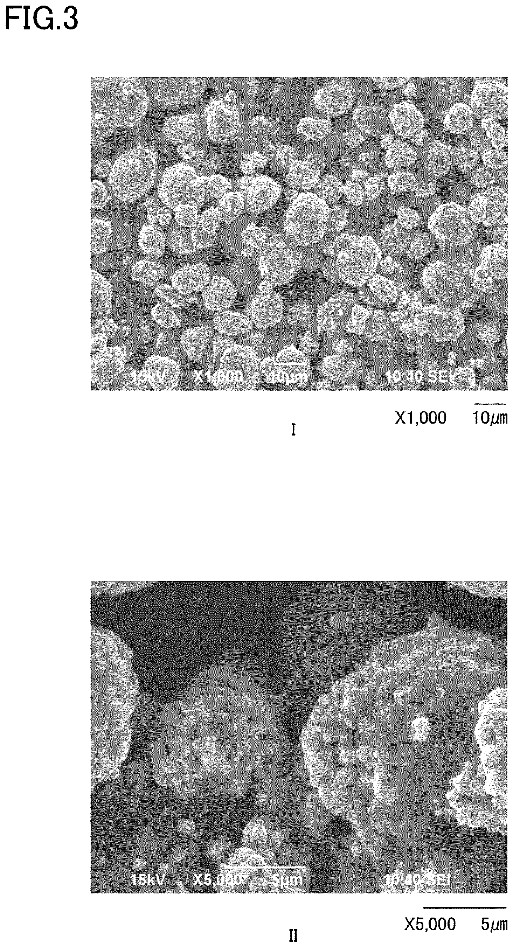

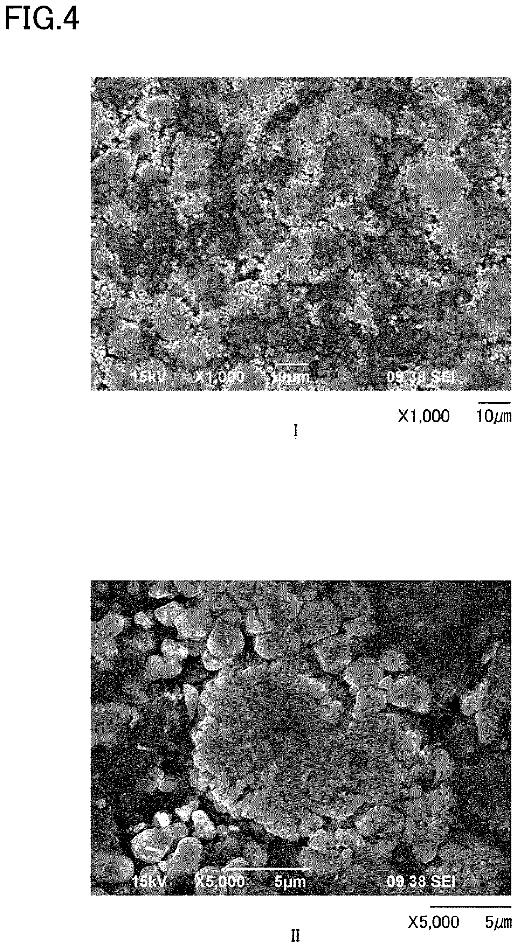

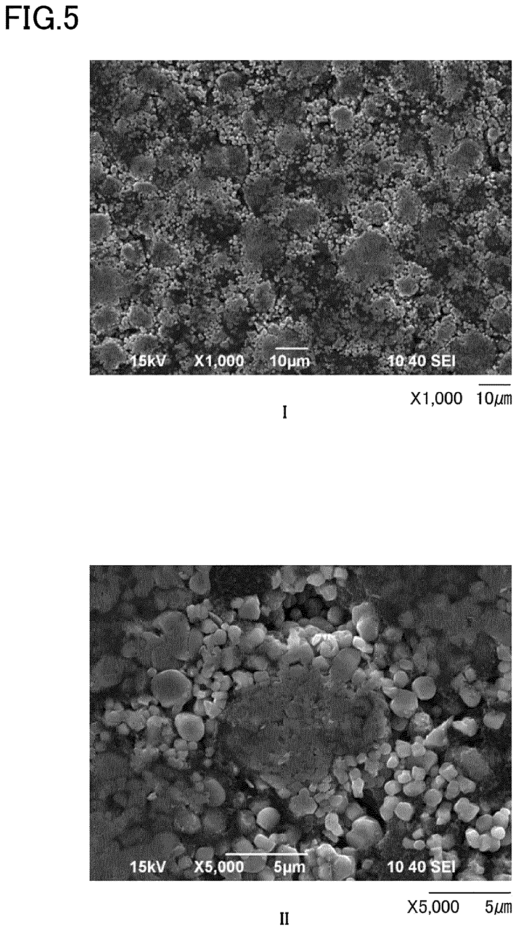

FIGS. 3, 4, and 5 show SEM photographs of the coating film (the positive electrode active material layer) of the positive electrode active material. Among these figures, FIG. 3 shows a typical coating film (a positive electrode active material layer pressed at 50 [kN]) containing a single type of secondary particle in a positive electrode active material. On the other hand, FIGS. 4 and 5 show the coating film (the positive electrode active material layer pressed at 75 [kN]) according to the present embodiment, which contains the mixture of the small-diameter single particles (the crystal synthesized by the flux method) and the great-diameter secondary particles in the positive electrode active material. Note that FIG. 4 shows a mixture of NCM particles and FIG. 5 shows a mixture of LCO particles (single particles) and NCM particles (secondary particles). In each figure, a magnification is 1000X in I and 5000X in II.

As shown in FIG. 3, a clearance is formed among the secondary particles and a space is formed around the secondary particles in the coating film containing the secondary particles. On the other hand, as shown in FIGS. 4 and 5, in the coating film containing the mixture of the single particles and the secondary particles, a clearance among the secondary particles and a space around the secondary particles are filled with the single particles. As described above, the positive electrode active material is the mixture of the small-diameter single particles (the first active material) and the great-diameter secondary particles (the second active material), and therefore, the coating film containing such a mixture can be formed such that the space among the secondary particles (the second active material) is filled with the single particles (the first active material). Note that in FIG. 5, a configuration similar to that of FIG. 4 can also be formed, and therefore, the single particle (the first active material) and the secondary particle (the second active material) may have different compositions.

According to the above-described configuration, the clearance among the secondary particles is filled with the single particles having no void, so that the density of the positive electrode active material can be increased. As a result, a volume resistance value can be decreased, and battery performance can be improved. The single particles harder than the secondary particle can be present around the secondary particles to bind the secondary particles to each other, and the damage of the secondary particle due to the pressure, such as deformation or cracking, can be reduced. Thus, it has been confirmed that the press resistance of the coating film can be improved and the battery performance is not degraded even when the pressure is increased to, e.g., 100 [kN] (Example 6).

It is characterized that in the coating film according to the present embodiment, the single particles are not locally concentrated, but are scattered in the space among the secondary particles, such as the clearance among the secondary particles and the space around the secondary particles. According to this configuration, the single particles (the first active material) are interposed among the secondary particles (the second active material) such that the secondary particles (the second active material) are bound to each other through the single particles (the first active material), and the area of contact among the particles is increased accordingly. Thus, a conduction path for lithium ions and free electrons can be increased in number. As a result of dispersion of the single particles across the entire coating film, the binder and the conductive assistant in the coating film can also be dispersed without locally remaining in, e.g., the clearance among the secondary particles, and can be interposed among the secondary particles and the single particles so as to bind these particles to each other. Thus, the conduction path for the lithium ions and the free electrons is branched into many paths among the particles, and therefore, excellent battery performance can be achieved by use of this positive electrode.

For the single particle (the first active material) synthesized by the flux method, the particle size of the crystal particle can be relatively easily controlled, and therefore, the standard deviation of the particle size of the single particle (the first active material) can be smaller than the standard deviation of the particle size of the secondary particle (the second active material). Thus, the single particles can easily enter the clearance among the secondary particles, and the positive electrode active material in which the secondary particles and the single crystal particles are densely mixed with each other can be obtained.

Note that as a modification, the positive electrode active material according to the present embodiment may be a mixture of a first active material containing single particles having a relatively-great particle size and a second active material containing secondary particles having a relatively-small particle size. The secondary particle is the aggregated single particles, and generally, the single particle has a relatively-small particle size and the secondary particle has a relatively-great particle size. However, according to, e.g., the flux method, the lithium composite oxide containing the single crystal particles having the required particle size can be obtained. Thus, a crystal synthesized with a relatively-great particle size by the flux method can be taken as the first active material (the single particles), and secondary particles having a relatively-small particle size can be taken as the second active material. According to this configuration, a coating film containing such a positive electrode active material can be formed such that a space among the single particles (the first active material) is filled with the secondary particles (the second active material).

According to this configuration, a large portion of the space can be occupied by the great-diameter particles which are the single particles with no void, and therefore, the density of the positive electrode active material can be increased. Moreover, the coating film can be formed using the relatively-hard single particles as a core, and the press resistance of the coating film (the positive electrode active material) can be improved.

(Second Embodiment)

Subsequently, a positive electrode according to a second embodiment of the present invention is a positive electrode of a lithium ion secondary battery in which a coating film containing a positive electrode active material is pressed against a surface of a positive electrode base material, and is characterized in that the positive electrode active material is a mixture of a first active material containing a single crystal of lithium composite oxide having a relatively-small particle size and a second active material containing a single crystal of lithium composite oxide having a relatively-great particle size and a space among particles of the second active material is filled with the first active material in the coating film. Hereinafter, differences of the present embodiment from the first embodiment will be mainly described.

The positive electrode active material according to the first embodiment is the mixture of the first active material containing the single particles having the relatively-small particle size and the second active material containing the secondary particles having the relatively-great particle size. On the other hand, the positive electrode active material according to the present embodiment is the mixture of the first active material containing the single crystal having the relatively-small particle size and the second active material containing the single crystal having the relatively-great particle size. That is, the positive electrode active material according to the present embodiment is a mixture of single particles, and each single particle is the single crystal particle.

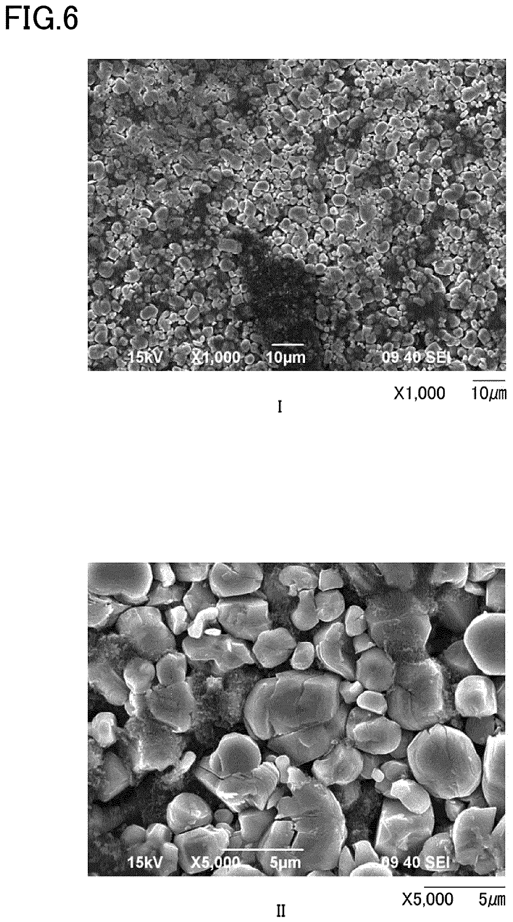

FIG. 6 shows SEM photographs of the coating film (a positive electrode active material layer pressed at 100 [kN]) of the positive electrode active material, which is a mixture of an NCM crystal synthesized with a small particle size by the flux method and an NCM crystal synthesized with a great particle size by the flux method, according to the present embodiment (a magnification is 1000X in I and 5000X in II).

As shown in FIG. 6, in the coating film according to the present embodiment, a clearance among the great crystal particles and a space around the great crystal particles are filled with the small crystal particles. As described above, the positive electrode active material is the mixture of the small-diameter crystal (the first active material) and the great-diameter crystal (the second active material), and therefore, the coating film containing such a mixture can be formed such that the space among the great-diameter crystal particles (the second active material) is filled with the small-diameter crystal particles (the first active material).

According to the above-described configuration, the positive electrode active material contains only the densely-formed single crystal, and the crystal particles having the different sizes are mixed such that the percentages of these crystal particles in the space are increased. Thus, the density of the positive electrode active material can be significantly increased. Moreover, the positive electrode active material contains only the stable and hard single crystal so that the press resistance of the coating film can be significantly improved. According to the present embodiment, the smaller and lighter positive electrode can be provided with a certain level of battery performance.

As in the coating film according to the first embodiment, it is also characterized that in the coating film according to the present embodiment, the small-diameter crystal particles are not locally concentrated, but are scattered in the space among the great-diameter crystal particles, such as the clearance among the great-diameter crystal particles and the space around the great-diameter crystal particles. Thus, the small-diameter crystal particles (the first active material) are interposed among the great-diameter crystal particles (the second active material) such that the great-diameter crystal particles (the second active material) are bound to each other through the small-diameter crystal particles (the first active material), and the area of contact among the crystal particles is increased accordingly. Thus, a conduction path for lithium ions and free electrons can be increased in number. As a result of dispersion of the small-diameter crystal particles across the entire coating film, a binder and a conductive assistant in the coating film can also be dispersed without locally remaining in, e.g., the clearance among the great-diameter crystal particles, and can be interposed among these crystal particles so as to bind the crystal particles to each other. Thus, the conduction path for the lithium ions and the free electrons is branched into many paths among the crystal particles, and therefore, excellent battery performance can be achieved by use of the positive electrode.

Note that for the positive electrode active materials according to the first embodiment and the second embodiment, the particle size of each particle (each crystal particle) upon mixing of the first active material and the second active material may be set as follows, for example.

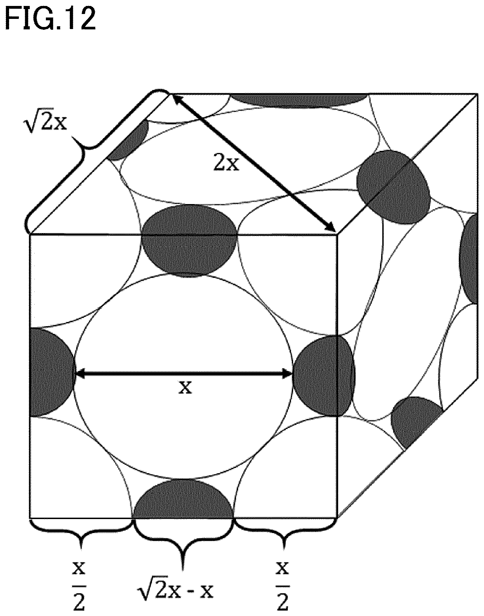

Assuming that a cubic space is most densely filled with spherical great-diameter particles (a particle not shaded in the figure) having a particle size (a particle diameter) x as shown in FIG. 12, the length of one side is $\sqrt{2} \cdot x$. The maximum particle size of a spherical small-diameter particle (a particle shaded in the figure) with which the space can be filled is $(\sqrt{2} \cdot x) - x$, i.e., $x\{(\sqrt{2}) - 1\}$. Thus, in order to fill a clearance among the great-diameter particles at least with the small-diameter particles, the particle size of each particle (each crystal particle) may be set such that "

"Particle Size of Small-Diameter Particle $<$ Particle Size of Great-Diameter Particle $\times \{(\sqrt{2}) - 1\}$" is satisfied.

In a case where the small-diameter particle is a single particle and the great-diameter particle is a secondary particle, the minimum value of a clearance among the secondary particles (the second active material) is represented by (Average Particle Size of Secondary Particle) - (Standard Deviation of Particle Size of Secondary Particle). On the other hand, the maximum value of the size of the single particle (the first active material) is represented by (Average Particle Size of Single Particle) + (Standard Deviation of Particle Size of Single Particle). Thus, the value obtained by addition of the standard deviation of the particle size of the single particle (the first active material) to the average particle size of the single particle (the first active material) is set smaller than the clearance among the secondary particles (the second active material) having the particle size obtained by subtraction of the standard deviation of the particle size from the average particle size, so that the clearance among the secondary particles (the second active material) can be most densely filled with the single particles (the first active material).

Note that the present method is one example and a theoretically-derived standard. Actually, the particle is not always in the spherical shape, and there are variations in the shapes and particle sizes of the great-diameter particle and the small-diameter particle. For this reason, the particle size of each particle (each crystal particle) upon mixing of the first active material and the second active material is not necessarily set so as to satisfy the above-described standard.

[Battery]

A battery according to an embodiment of the present invention is a lithium ion secondary battery (LIB) characterized by having the positive electrode according to the first embodiment or the positive electrode according to the second embodiment as described above. Thus, the battery according to the present embodiment may have any configuration of the lithium ion secondary battery as long as the battery has at least the above-described positive electrode.

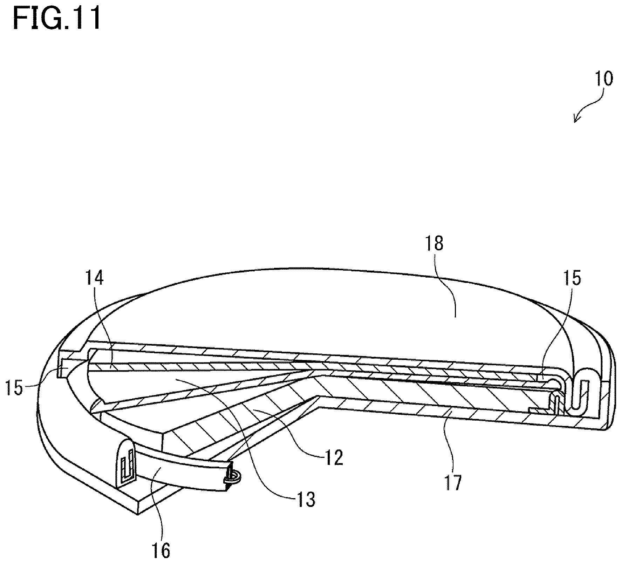

As a configuration example of the lithium ion secondary battery according to the present embodiment, FIG. 11 shows a coin cell 10 used for, e.g., experiment and research and having a relatively-simple configuration. The coin cell 10 is configured such that a positive electrode 12, a separator 13, a negative electrode 14, and a non-aqueous electrolyte 15 are housed in predetermined arrangement in a positive electrode case 17 and a negative electrode case 18, and can be manufactured in such a manner that these members are assembled while being fixed to predetermined locations as necessary with, e.g., a ring 16.

Here, the configuration of the positive electrode 12 is as described above. As in the positive electrode, the negative electrode 14 may be configured such that a negative electrode active material layer containing a negative electrode active material is formed on a surface of a negative electrode current collector and is pressed as necessary. The negative electrode active material to be used may include, but not limited to, graphite and coke, and the negative electrode current collector to be used may include, but not limited to, foil and nets of copper and stainless steel, for example. On the other hand, e.g., integrated lithium metal foil of the negative electrode active material and the negative electrode current collector may be used.

The separator 13 and the non-aqueous electrolyte 15 are interposed between the positive electrode 12 and the negative electrode 14, and the non-aqueous electrolyte 15 penetrates the separator 13 sandwiched between the positive electrode 12 and the negative electrode 14. The separator 13 is insulated so as not to cause the positive electrode 12 and the negative electrode 14 to contact each other, and holds the non-aqueous electrolyte 15 to such an extent that movement of lithium ions is not interfered. For example, the separator 13 to be used may include, but not limited to, porous resin. The non-aqueous electrolyte 15 transfers the lithium ions between the positive electrode 12 and the negative electrode 14. The non-aqueous electrolyte 15 to be used may include, but not limited to, one obtained by dissolving of a supporting electrolyte in an organic solvent, for example. The positive electrode case 17 and the negative electrode case 18 also serve as a positive electrode terminal and a negative electrode terminal. The cases to be used may include, but not limited to, stainless steel, for example.

The lithium ion secondary battery according to the present embodiment is, for example, the coin cell 10, but, e.g., the materials of the negative electrode, the non-aqueous electrolyte, etc. and the shape of each member including the positive electrode are not limited as long as the positive electrode according to the embodiment of the present invention is use, and any well-known configuration can be employed. A manufacturing method is not particularly limited as long as the lithium ion secondary battery according to the present embodiment is obtained.

According to the lithium ion secondary battery according to the present embodiment, the density of the positive electrode active material can be increased, and excellent battery performance can be achieved. Moreover, the battery can be provided, which is configured so that the press resistance of the positive electrode can be improved and degradation of the battery performance due to a predetermined pressure can be reduced. As a result, the small and light lithium ion secondary battery can be provided with excellent battery performance.

[Examples]

A positive electrode active material was manufactured with a composition shown in Tables 1 and 2, and a positive electrode was manufactured by application of a pressure shown in Table 1 to the positive electrode active material. Moreover, a lithium ion secondary battery (LIB) was manufactured using the positive electrode. Note that for the sake of visibility in Tables 1 and 2, a secondary particle is shown in a section of a great-diameter particle and a crystal synthesized by the flux method is shown in a section of a small-diameter particle in cases where the positive electrode active material contains only the secondary particles or the crystal synthesized by the flux method. Note that Table 1 shows comparative examples and examples and Table 2 shows reference examples.

Table 1

| Positive Electrode Active Material | | Comparative Example 1 | Comparative Example 2 | Comparative Example 3 | Example 1 | Example 2 | Example 3 | Example 4 | Example 5 | Example 6 | Example 7 | Example 8 | Example 9 |
|---|---|---|---|---|---|---|---|---|---|---|---|---|---|
| 1 Great-Diameter | | NCM Secondary Particle 12.5 $\mu$m | NCM Secondary Particle 12.5 $\mu$m | NCM Secondary Particle 12.5 $\mu$m | NCM Secondary Particle 12.5 $\mu$m | NCM Secondary Particle 12.5 $\mu$m | NCM Secondary Particle 12.5 $\mu$m | NCM Secondary Particle 12.5 $\mu$m | NCM Secondary Particle 12.5 $\mu$m | NCM Secondary Particle 12.5 $\mu$m | NCM Secondary Particle 12.5 $\mu$m | NCM Flux-Grown Crystal 7.5 $\mu$m | NCM Secondary Particle 12.5 $\mu$m |
| 2 Small-Diameter | | - | NCM Secondary Particle 5.0 $\mu$m | NCM Secondary Particle 5.0 $\mu$m | NCM Flux-Grown Crystal 3.1 $\mu$m | NCM Flux-Grown Crystal 7.5 $\mu$m | NCM Flux-Grown Crystal 4.7 $\mu$m | NCM Flux-Grown Crystal 4.7 $\mu$m | NCM Flux-Grown Crystal 4.7 $\mu$m | NCM Flux-Grown Crystal 4.7 $\mu$m | LC0 Flux-Grown Crystal 1.1 $\mu$m | NCM Flux-Grown Crystal 3.1 $\mu$m | NCM Flux-Grown Crystal 1.9 $\mu$m |
| Percentage of 2 | | 0 wt% | 20 wt% | 5 wt% | 20 wt% | 20 wt% | 5 wt% | 10 wt% | 20 wt% | 40 wt% | 40 wt% | 20 wt% | 20 wt% |
| Weight Energy Density [mAh/g] (@10 [C] ) | 50 kN | 99,02 | 110,1 | 98,12 | 123,95 | 111,63 | 101,67 | 99,21 | 113,24 | 102,17 | 37,59 | 98, 66 | 109,5 |
| | 75 kN | × 92.71 | × 101. 57 | × 85.15 | × 111.59 | ○ 114. 26 | × 95. 53 | ○ 107.08 | ○ 115. 56 | ○ 109.01 | ○ 69. 75 | ○ 98. 83 | × 63. 13 |
| | 100 kN | X 86.81 | - | - | - | - | - | - | X 86. 89 | ○ 110.17 | - | ○ 101. 42 | - |
| Coating Film Density [g/cm$^3$] | 50 kN | 2, 11 | 2,88 | 2, 59 | 3, 04 | 3,05 | 2, 46 | 2, 65 | 2. 92 | 3,07 | 2,74 | 2, 95 | 2, 92 |
| | 75 kN | 2, 56 | - | < | - | - | - | - | 3, 17 | 3. 22 | 2,94 | 3, 19 | - |
| | 100 kN | 2,84 | - | - | - | - | - | - | - | 3,30 | - | 3, 41 | - |

The flux-grown crystal indicates a crystal synthesized by a flux method.
The particle sizes of the secondary particle and the flux-grown crystal indicate average particle sizes measured by a laser diffraction scattering method.
The circle mark indicates an increase in the weight energy density under a low pressure, and the cross mark indicates a decrease in the weight energy density.

Table 2

| Positive Electrode Active Material | | Reference Example 1 | Reference Example 2 | Reference Example 3 |
|---|---|---|---|---|
| 1 Great-Diameter | | - | - | - |
| 2 Small-Diameter | | NCM Flux-Grown Crystal 3.1 $\mu m$ | NCM Flux-Grown Crystal 4.7 $\mu m$ | NCM Flux-Grown Crystal 7.5 $\mu m$ |
| Percentage of 2 | | 100 wt% | 100 wt% | 100 wt% |
| Weight Energy Density [mAh/g] (@10 [C] ) | 50 kN | 105, 33 | 101,93 | 100, 08 |
| | 75 kN | - | - | - |
| | 100 kN | ○ 108. 18 | ○ 106. 49 | ○ 100. 89 |
| Coating Film Density [g/cm$^3$] | 50 kN | 2, 62 | 3, 01 | 2, 80 |
| | 75 kN | - | - | - |
| | 100 kN | 2, 98 | 3, 20 | 3, 13 |

The flux-grown crystal indicates a crystal synthesized by a flux method.
The particle sizes of the secondary particle and the flux-grown crystal indicate average particle sizes measured by a laser diffraction scattering method.
The circle mark indicates an increase in the weight energy density under a low pressure, and the cross mark indicates a decrease in the weight energy density.

(NCM Crystal Synthesized by Flux Method)

As crystal materials, lithium carbonate ($Li_2CO_3$), nickel oxide (NiO), cobalt oxide ($Co_3O_4$), and manganese oxide (MnO) were used. As a flux, lithium borate ($Li_3BO_3$) was used. A solute obtained by mixing of the above-described crystal materials at a predetermined ratio and the flux were mixed at a solute-flux molar ratio of 80 [mol%] : 20 [mol%].
A crucible of magnesium oxide was filled with the resultant powder mixture, and was heated in a heating furnace. The crucible was increased in temperature at a temperature increase rate of 600 [°C/hour] under an oxygen flow rate of 0.5 [L/min], and was held at 900 [°C] for 3 [hours]. Subsequently, the crucible was cooled with air to a room temperature. Thereafter, the crucible was washed with hot water at 60 [°C], and the flux was removed accordingly. Then, the resultant was dried, and a single crystal (a crystal synthesized by the flux method) of NCM-based oxide (Li(Ni-Co-Mn)O$_2$) was obtained by annealing at 850 [°C].

(LCO Crystal Synthesized by Flux Method)

As crystal materials, lithium hydroxide (LiOH) and cobalt oxide ($Co_3O_4$) were used. As a flux, sodium chloride (NaCl) was used. A solute obtained by mixing of the above-described crystal materials at a predetermined ratio and the flux were mixed at a solute-flux molar ratio of 95 [mol%] : 5 [mol%].
A crucible of magnesium oxide was filled with the resultant powder mixture, and was heated in a heating furnace. The crucible was increased in temperature at a temperature increase rate of 600 [°C/hour] under an oxygen flow rate of 0.5 [L/min], and was held at 900 [°C] for 5 [hours]. Subsequently, the crucible was cooled with air to a room temperature after having been cooled at a temperature decrease rate of 200 [°C/hour] for 2 [hours]. Thereafter, the crucible was washed with hot water at 60 [°C], and the flux was removed accordingly. Then, the resultant was dried, and a single crystal (a crystal synthesized by the flux method) of LCO (LiCoO$_2$) was obtained by annealing at 700 [°C].

(Secondary Particle)

As a secondary particle, a particle of commercially-available NCM-based oxide (NCM523-ME5E12D manufactured by Hohsen Corporation) was used.

(Positive Electrode Active Material)

For manufacturing a positive electrode, the secondary particles obtained by the above-described method and/or the crystal synthesized by the flux method were used as a positive electrode active material. Note that the particle sizes of the secondary particle and the crystal synthesized by the flux method were measured by a laser diffraction scattering method using a laser diffraction particle size analyzer (SALD-7100nano manufactured by Shimadzu Corporation).

Table 3 is a table showing the average particle sizes and particle size standard deviations of the secondary particles and the primary particles synthesized by the flux method. Note that the particle size of the primary particle was controlled in such a manner that a condition upon synthesis by the flux method, such as a temperature or a concentration, is changed. Table 3 shows that the standard deviation of the particle size of the primary particle is smaller than the standard deviation of the particle size of the secondary particle. Even if the secondary particle is crushed into a smaller particle size, the standard deviation of the particle size of the crushed secondary particle is not as small as the standard deviation of the particle size of the primary particle.

Table 3

| | Secondary Particle | Primary Particle | Primary Particle | Primary Particle | Crushed Secondary Particle |
|---|---|---|---|---|---|
| Average Particle Size [$\mu$m] | 12, 5 | 3,1 | 4, 7 | 7,5 | 9,9 |
| Standard Deviation | 5,10 | 2, 07 | 2, 67 | 2,02 | 3, 69 |
| Max [$\mu$m] | 38, 17 | 4, 86 | 11,08 | 38, 17 | 46, 91 |
| Min [$\mu$m] | 3,95 | 0,15 | 0,50 | 2, 13 | 0, 05 |
| Max-Min [$\mu$m] | 34,22 | 4, 71 | 10, 58 | 36, 04 | 46,86 |

(Positive Electrode)

The positive electrode active material (the secondary particles and/or the crystal synthesized by the flux method) having the composition shown in Tables 1 and 2, PVDF (a binder), and acetylene black (a conductive assistant) were dispersed at a predetermined ratio in NMP, and in this manner, a positive electrode material mixture was manufactured. Subsequently, the positive electrode material mixture was applied to one surface of a positive electrode base material (a positive electrode current collector) made of aluminum foil, and was dried. The solvent was volatilized accordingly. In this manner, a coating film (a positive electrode active material layer) was formed on the aluminum foil. Subsequently, the aluminum foil formed with the coating film was punched into a circular shape having a diameter ($\phi$) of 14 [mm], and was pressed with a predetermined pressure shown in Table 1 for 1 [minute] by a press device (P-1B-041B manufactured by Rikenkiki Co., Ltd.). In this manner, a positive electrode was manufactured.

(Lithium Ion Secondary Battery)

An LIB was manufactured in such a manner that the coin cell 10 shown in FIG. 11 is assembled. For the positive electrode case 17 and the negative electrode case 18, conductive stainless steel (SUS 316) was used. For the separator 13, an insulating porous film (a product name: Celgard 2400) was used. For the negative electrode 14, integrated lithium metal foil of a negative electrode active material and a negative electrode current collector was used. For the non-aqueous electrolyte 15, a commercially-available electrolytic solution (LGB-00018 manufactured by Kishida Chemical Co., Ltd.) was used.

(Analysis of Structure of Positive Electrode)

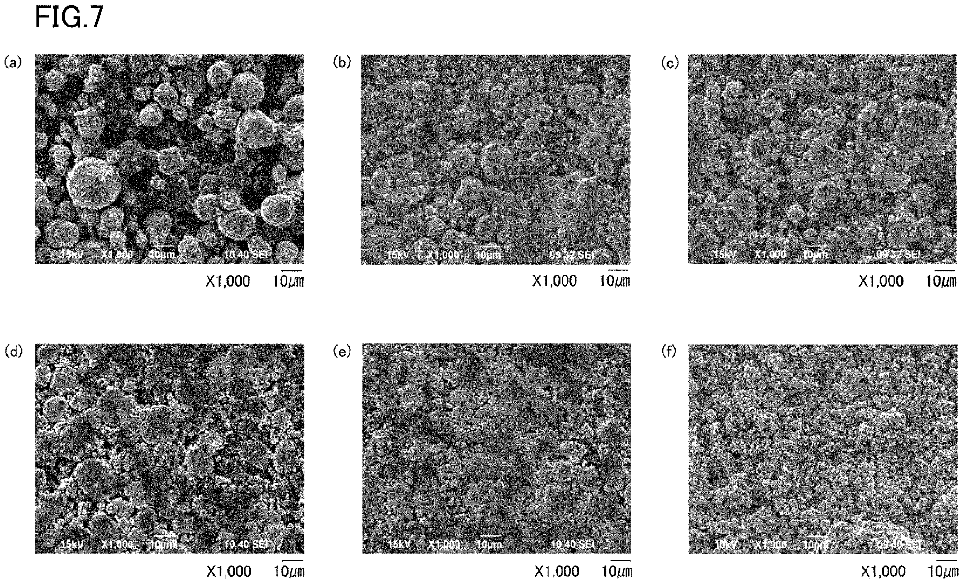

A coating film structure (the state of the secondary particle and the crystal synthesized by the flux method) of the positive electrode of each example was observed using a scanning electron microscope (SEM). FIGS. 5 and 6 already described above show SEM photographs of Examples 7 and 8. FIG. 7 shows, according to Comparative Example 1 (FIG. 7(a)), Example 3 (FIG. 7(b)), Example 4 (FIG. 7(c)), Example 5 (FIG. 7(d)), Example 6 (FIG. 7(e)), and Reference Example 2 (FIG. 7(f)), SEM photographs of the coating films (the positive electrode active material layers pressed at 50 [kN]) of the positive electrode active materials different from each other in the mixing ratio of the NCM secondary particles and the NCM crystal synthesized by the flux method (a magnification is 1000X in either case).

The coating film density (the density of the positive electrode active material in the coating film) of the positive electrode of each example was measured by the following method. The "weight of the positive electrode" was measured by an electronic scale (GH-120 manufactured by A&D Company, Limited), and the "weight (W) of the coating film" was calculated by subtraction of the "weight of the aluminum foil punched into the circular shape having a diameter (φ) of 14 [mm]" from the "weight of the positive electrode."

Subsequently, the "thickness of the positive electrode" was measured by a micrometer (MDC-25SX manufactured by Mitutoyo Corporation), the "thickness (T) of the coating film" was calculated by subtraction of the "thickness of the aluminum foil" from the "thickness of the positive electrode," and the "volume (V) of the coating film (in a columnar shape)" was calculated from the "thickness (T) of the coating film."

$$\text{"Volume (V) of Coating Film"} = \pi r^2 h = \pi \times (14/2)^2 \times \text{"Thickness (T) of Coating Film"}$$

From the "weight (W) of the coating film" and the "volume (V) of the coating film" calculated by the above-described methods, the "coating film density [g/cm³]" was calculated. The coating film density of each example is shown in Tables 1 and 2.

$$\text{"Coating Film Density [g/cm}^3\text{]"} = \text{"Weight (W) of Coating Film"} / \text{"Volume (V) of Coating Film"}$$

(Evaluation of Press Resistance of Positive Electrode and Performance of Lithium Ion Secondary Battery)

For the LIB having the positive electrode of each example, the performance thereof was evaluated after charge and discharge by a battery charge-discharge device (HJ1005SD8 manufactured by Hokuto Denko Corporation). Specifically, the LIB having the positive electrode of each example was discharged at a constant current of 10 [C], and then, the capacity [mAh] thereof was measured. In this manner, a weight energy density (mAh/g) was obtained. Then, the press resistance was evaluated based on whether or not the LIB having the positive electrode, for which the pressure had been increased, has been decreased in the weight energy density. Specifically, in, e.g., a case where the pressure had been increased from 50 [kN] to 75 [kN], if the weight energy density has not decreased, the press resistance was 75 [kN]. In a case where the pressure had been increased from 75 [kN] to 100 [kN], if the weight energy density has not decreased, the press resistance was 100 [kN]. The press resistance of each example is shown together with the basic weight energy density in Tables 1 and 2.

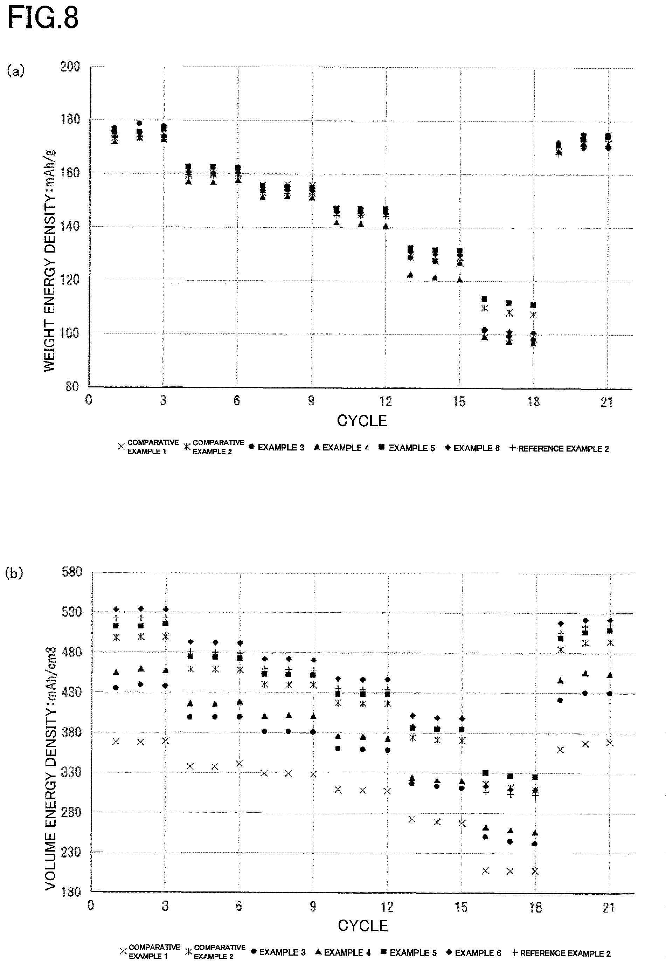

Three cycles of charge and discharge were performed at a predetermined charge-discharge rate of 0.05 [C] to 10 [C], and thereafter, the capacity [mAh] was measured and a capacity density (the weight energy density [mAh/g] and a volume energy density [mAh/cm³]) was obtained. FIG. 8 shows graphs of the capacity densities of the coating films (the positive electrode active material layers pressed at 50 [kN]) of the positive electrode active materials different from each other in the mixing ratio of the NCM secondary particles and the NCM crystal synthesized by the flux method according to Comparative Example 1, Comparative Example 2, Example 3, Example 4, Example 5, Example 6, and Reference Example 2 (FIG. 8(a) shows the weight energy density, and FIG. 8(b) shows the volume energy density).

[NCM Secondary Particles × NCM Crystal Synthesized by Flux Method (Examples 1 to 6 and 9)]

Hereinafter, the "crystal synthesized by the flux method" will be sometimes referred to as a "flux-grown crystal" as in Tables 1 and 2. As shown in Table 1 and FIG. 7, the coating film density of the positive electrode for which the pressure was 50 [kN] was 2.11 [g/cm³] in Comparative Example 1 (an NCM flux-grown crystal of 0 [wt%]) where only the NCM secondary particles having an average particle size of 12.5 [μm] were contained (FIG. 7(a)). On the other hand, in Example 3 (NCM Flux-Grown Crystal Average Particle Size of 4.7 [μm] < NCM Secondary Particle Average Particle Size of $12.5\ [\mu m] \times \{(\sqrt{2}) - 1\} \approx 5.2$ ) where the NCM crystal satisfying "Particle Size of Small-Diameter Particle < Particle Size of Great-Diameter Particle $\times \{(\sqrt{2} - 1)\}$, having an average particle size of 4.7 [μm], and synthesized by the flux method was mixed at 5 [wt%], a clearance among the secondary particles and a space around the secondary particles were filled with the crystal particles synthesized by the flux method, and the coating film density was improved to 2.46 [g/cm³] (FIG. 7(b)). As compared to Comparative Example 3 where the percentage of the small particle size is 5 [wt%] which is the same as that of Example 3 and the NCM secondary particles were mixed with each other, the weight energy density in Example 3 was improved. Further, as the percentage of the NCM crystal synthesized by the flux method increased, the density of the positive electrode active material (the secondary particles and the crystal synthesized by the flux method) increased and the coating film density increased accordingly (Example 4 (a flux-grown crystal of 10 [wt%]) and Example 5 (a flux-grown crystal of 20 [wt%]), FIGS. 7(c) and 7(d)). In Example 6 where the NCM crystal synthesized by the flux method was mixed at 40 [wt%], the coating film density was 3.07 [g/cm$^3$], and was greater than 3.01 [g/cm$^3$] in Reference Example 2 (a flux-grown crystal of 100 [wt%]) where only the NCM crystal synthesized by the flux method was mixed (FIGS. 7(e) and 7(f)).

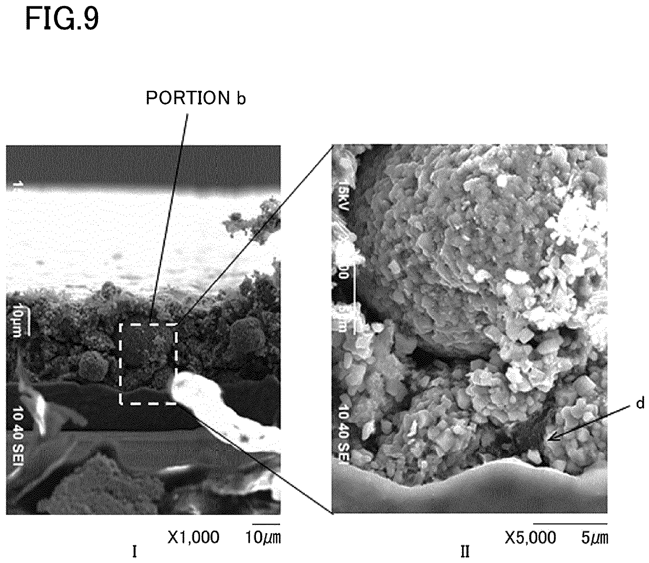

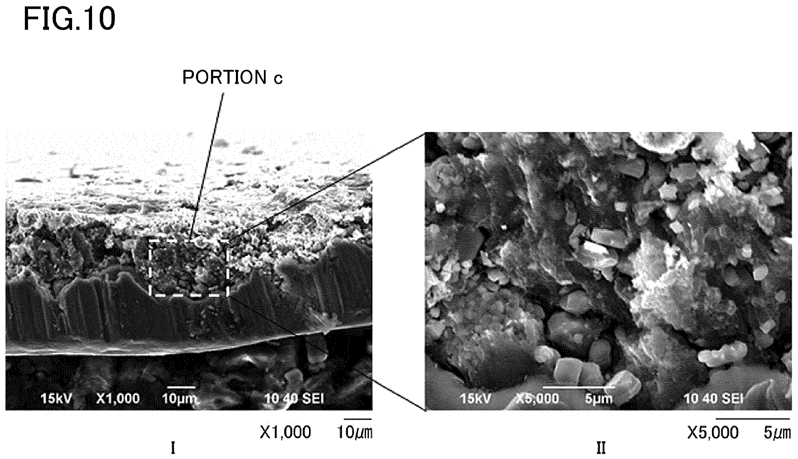

The coating film structures of Comparative Example 1 and Example 5 will be further compared to each other. FIG. 9 shows SEM photographs of the section of the coating film (the positive electrode active material layer pressed at 50 [kN]) of Comparative Example 1, and FIG. 9-II shows an enlarged photograph of a portion b of FIG. 9-I. FIG. 10 shows SEM photographs of the section of the coating film (the positive electrode active material layer pressed at 50 [kN]) of Example 5, and FIG. 10-II shows an enlarged photograph of a portion c of FIG. 10-I (a magnification is 1000X in I and 5000X in II in either case). In the coating film of Comparative Example 1, the binder and the conductive assistant were locally concentrated in, e.g., the clearance among the great-diameter particles (e.g., a dark portion indicated by an arrow d in FIG. 9-II) and each particle (the secondary particles and the crystal synthesized by the flux method) could be relatively clearly visually recognized. On the other hand, in the coating film of Example 5, the binder and the conductive assistant are dispersed and scattered across a large area of the coating film, and are mixed with the crystal synthesized by the flux method. Thus, it is difficult to clearly visually recognize each particle (the secondary particles and the crystal synthesized by the flux method). Based on these points, the secondary particles and the crystal synthesized by the flux method are mixed so that the binder and the conductive assistant can be dispersed together with the crystal synthesized by the flux method across the entirety of the coating film. Moreover, as shown in FIGS. 7 and 10, the crystal particles synthesized by the flux method are interposed among the secondary particles such that the secondary particles are bound to each other through these crystal particles, and the binder and the conductive assistant are interposed among the particles and the crystal particles such that these particles and crystal particles are bound to each other through the binder and the conductive assistant.

The coating film density in Comparative Example 2 (Particles with Average Particle Size of 12.5 [μm] : Particles with Average Particle Size of 5.0 [μm] = 80 [wt%] : 20 [wt%]) where the NCM secondary particles were mixed with each other was 2.88 [g/cm$^3$], whereas the coating film density in Example 5 (Particles with Average Particle Size of 12.5 [μm] : Particles with Average Particle Size of 4.7 [μm] = 80 [wt%] : 20 [wt%]) where the NCM secondary particles having the substantially same size as that of Comparative Example 2 and the NCM crystal synthesized by the flux method were mixed at the same ratio as that of Comparative Example 2 was 2.92 [g/cm$^3$]. This shows that the coating film density was more improved in the case where the NCM crystal synthesized by the flux method was mixed than in the case where only the NCM secondary particles were mixed.

In comparison in the battery performance among Comparative Example 1 where only the NCM secondary particles were mixed and Examples 1 to 6 where the NCM crystal synthesized by the flux method was mixed, there was no significant difference from Comparative Example 1 in the weight energy density [mAh/g] shown in Table 1 and FIG. 8(a) at a low rate of 0.05 [C] to 5 [C], but at a high rate of 10 [C], Examples 1, 2, and 5 were higher in the weight energy density [mAh/g] than Comparative Example 1 by 12.7 [%] to 25.2 [%]. On the other hand, in terms of the volume energy density [mAh/cm$^3$] shown in FIG. 8(b), the examples were higher than Comparative Example 1 by 16 [%] to 58 [%] at any charge-discharge rate. As described above, Examples 1 to 6 showed improvement in the battery performance as compared to Comparative Example 1, particularly improvement in the coating film density, and therefore, showed great improvement in the capacity (the volume energy density [mAh/cm$^3$]) per volume.

In comparison between Comparative Example 2 where the NCM secondary particles were mixed with each other and Example 5 where the NCM secondary particles having the substantially same size as that of Comparative Example 2 and the NCM crystal synthesized by the flux method were mixed at the same ratio as that of Comparative Example 2, the weight energy density [mAh/g] was at the same level at any charge-discharge rate, but the volume energy density [mAh/cm$^3$] was higher than Comparative Example 2 by 2.5 [%] to 4.7 [%] at any charge-discharge rate. Thus, the battery performance was improved.

In comparison among the examples, the capacity density (the weight energy density [mAh/g] and the volume energy density [mAh/cm$^3$]) was higher in Examples 5 and 6 where the percentage of the NCM crystal synthesized by the flux method was high than in Examples 3 and 4 where the percentage of the NCM crystal synthesized by the flux method was low, and tendency showed that the battery performance is more improved as the percentage of the NCM crystal synthesized by the flux method increases.

In comparison among the examples where the percentage of the NCM crystal is the same value, i.e., 20 [wt%], the press resistance was improved (a plus resistance of 75 [kN]) in Examples 2 and 5 where the small particle size is greater than in Examples 1 and 9 where the small particle size is smaller.

In terms of the press resistance, in Comparative Example 2 where the NCM secondary particles were mixed with each other, the battery performance (the weight energy density [mAh/g]) was degraded (a press resistance of 50 [kN]) at a pressure of 75 [kN]. On the other hand, in Example 5 where the NCM secondary particles having the substantially same size as that of Comparative Example 2 and the NCM crystal synthesized by the flux method were mixed at the same ratio as that of Comparative Example 2, the battery performance was not degraded even at a pressure of 75 [kN], and the press resistance was improved (a press resistance of 75 [kN]). In Example 6 (a flux-grown crystal of 40 [wt%]) where the percentage of the mixed NCM crystal synthesized by the flux method is higher, the battery performance was not degraded even at a pressure of 100 [kN], and the press resistance was further improved (a press resistance of 100 [kN]).

Note that in Example 1 (the average particle size of the NCM flux-grown crystal is 3.1 [μm]) and Example 3 (the percentage of the mixed NCM flux-grown crystal is 5 [wt%]), the press resistance was lower as compared to Examples 2, 4, 5, and 6. This is because it is assumed that it is more difficult to bind the great-diameter secondary particles to each other as the size (the particle size) of the crystal to be mixed decreases or the percentage of the crystal to be mixed decreases. Thus, the percentage of the mixed flux-grown crystal is set lower as the particle size of the flux-grown crystal increases, and therefore, the press resistance can be improved.

[NCM Secondary Particles × LCO Crystal Synthesized by Flux Method (Example 7)]

As shown in Table 1, in Example 7 where the LCO crystal synthesized by the flux method was mixed with the NCM secondary particles, the coating film density of the positive electrode was improved for each pressure as compared to Comparative Example 1 where only the NCM secondary particles were mixed, as in Examples 1 to 6 and 9 where the NCM crystal synthesized by the flux method was mixed. The positive electrode active material according to Example 7 contains less Ni element, and therefore, the battery performance (the weight energy density [mAh/g]) was lower than that of the positive electrode active material (e.g., Example 6 where the percentage of the mixed flux-grown crystal is the same, i.e., 40 [wt%]) containing only the NCM-based oxide, but was not degraded (a press resistance of 75 [kN]) even when the pressure was increased to 75 [kN]. Rather, the battery performance was greatly improved (+32.56 [mAh/g]) as compared to Example 6 (+6.84 [mAh/g]). Note that when the charge-discharge rate was changed for the LIB according to Example 7, the weight energy density [mAh/g] transitioned in the same pattern as that of Comparative Example 1 from 0.05 [C] to 2 [C]. The volume energy density [mAh/cm$^3$] was higher than that of Comparative Example 1 from 0.05 [C] to 5 [C], and (although the positive electrode active material contains less Ni element) the same level of battery performance as that of the positive electrode active material containing only the NCM-based oxide was achieved at a low rate.

[NCM Crystal Synthesized by Flux Method × NCM Crystal Synthesized by Flux Method (Example 8)]

Example 8 where the great-diameter NCM crystal and the small-diameter NCM crystal synthesized by the flux method were mixed with each other showed, as in Tables 1 and 2, a press resistance of 100 [kN] which is the same level as those in Reference Examples 1, 2, and 3 where only the NCM crystal synthesized by the flux method was contained. The coating film density of the positive electrode at a pressure of 100 [kN] was 3.41 [g/cm$^3$], and the positive electrode coating film was formed with the highest density of the positive electrode active material among all the examples and the reference examples. Note that when the charge-discharge rate was changed for the LIB according to Example 8, the weight energy density [mAh/g] was at the same level as that of Comparative Example 1 at any charge-discharge rate (0.05 [C] to 10 [C]), but the volume energy density [mAh/cm$^3$] was higher than that of Comparative Example 1 at any charge-discharge rate and the battery performance was improved.

From the above-described results, the positive electrode active material is the mixture of the secondary particles and the single particles (e.g., the single crystal synthesized by the flux method) or the mixture of the single particles (e.g., the single crystal synthesized by the flux method) having the different sizes, and therefore, the coating film density of the positive electrode can be improved and particularly the capacity (the volume energy density [mAh/cm$^3$]) per volume can be increased. Moreover, the press resistance is also improved, and therefore, the small and light battery can be suitably produced with excellent battery performance as the battery having the positive electrode according to the present invention (i.e., the battery according to the present invention).

DESCRIPTION OF REFERENCE CHARACTERS

10    Coin Cell
12    Positive Electrode
13    Separator
14    Negative Electrode

15   Non-Aqueous Electrolyte
16   Fixing Ring
17   Positive Electrode Case
18   Negative Electrode Case

**Claims**

1.   A positive electrode of a lithium ion secondary battery in which a coating film containing a positive electrode active material is pressed against a surface of a positive electrode base material,
      wherein the positive electrode active material is a mixture of a first active material containing a single particle of lithium composite oxide and a second active material containing a secondary particle which is aggregated single particles of lithium composite oxide.

2.   The positive electrode of claim 1, wherein
      in the coating film, a space among particles of the second active material is filled with the first active material.

3.   The positive electrode of claim 2, wherein
      in the coating film, the first active material is interposed among the particles of the second active material such that the particles of the second active material are bound to each other through the first active material.

4.   The positive electrode of any one of claims 1 to 3, wherein
      the single particle is a single crystal.

5.   The positive electrode of any one of claims 1 to 4, wherein
      the single particle is a crystal synthesized by a flux method.

6.   The positive electrode of claim 2, wherein
      an average particle size of the first active material is smaller than an average particle size of the second active material.

7.   The positive electrode of claim 6, wherein
      a standard deviation of a particle size of the first active material is smaller than a standard deviation of a particle size of the second active material.

8.   The positive electrode of any one of claims 2, 6, and 7, wherein
      a value obtained by addition of a standard deviation of a particle size of the first active material to an average particle size of the first active material is smaller than a clearance among the particles of the second active material having a particle size obtained by subtraction of a standard deviation of the particle size of the second active material from an average particle size of the second active material.

9.   A positive electrode of a lithium ion secondary battery in which a coating film containing a positive electrode active material is pressed against a surface of a positive electrode base material,

      wherein the positive electrode active material is a mixture of a first active material containing a single crystal of lithium composite oxide having a relatively-small average particle size and a second active material containing a single crystal of lithium composite oxide having a relatively-great average particle size, and
      in the coating film, a space among particles of the second active material is filled with the first active material.

10.  The positive electrode of claim 9, wherein
      in the coating film, the first active material is interposed among the particles of the second active material such that the particles of the second active material are bound to each other through the first active material.

11.  The positive electrode of claim 9 or 10, wherein
      the single particle is a crystal synthesized by a flux method.

12.  The positive electrode of any one of claims 1 to 11, wherein

      the coating film further contains at least one of a binder or a conductive assistant, and

in the coating film, the at least one of the binder or the conductive assistant is interposed among particles of the positive electrode active material such that the particles of the positive electrode active material are bound to each other through the at least one of the binder or the conductive assistant.

13. A lithium ion secondary battery comprising:
the positive electrode of any one of claims 1 to 12.

# FIG.1

(a)

X5,000    5μm

(b)

X5,000    5μm

FIG.2

PORTION a

I

II

X5,000    5 μm
X20,000    1 μm

# FIG.3

X1,000    10μm

I

X5,000    5μm

II

# FIG.4

X1,000    10μm

I

X5,000    5μm

II

# FIG.5

X1,000  10μm

I

X5,000  5μm

II

# FIG.6

X1,000    10μm

I

X5,000    5μm

II

# FIG.7

(a)

X1,000    10μm

(b)

X1,000    10μm

(c)

X1,000    10μm

(d)

X1,000    10μm

(e)

X1,000    10μm

(f)

X1,000    10μm

# FIG.8

(a)

(b)

# FIG.9

PORTION b

X1,000    10μm

I

X5,000    5μm

II

# FIG.10

PORTION c

X1,000    10μm

I

X5,000    5μm

II

# FIG.11

# FIG.12

$\sqrt{2}x$

$2x$

x

$\dfrac{x}{2}$   $\sqrt{2}x - x$   $\dfrac{x}{2}$

## INTERNATIONAL SEARCH REPORT

International application No.

**PCT/JP2021/034882**

### A. CLASSIFICATION OF SUBJECT MATTER

*H01M 4/131*(2010.01)i; *H01M 4/36*(2006.01)i
FI:   H01M4/131; H01M4/36 E

According to International Patent Classification (IPC) or to both national classification and IPC

### B. FIELDS SEARCHED

Minimum documentation searched (classification system followed by classification symbols)

H01M4/131; H01M4/36

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2010-070427 A (AGC SEIMI CHEMICAL CO LTD) 02 April 2010 (2010-04-02) paragraphs [0041]-[0044], [0055], fig. 1 | 1-8, 12-13 |
| Y | | 11 |
| X | US 2019/0393479 A1 (SK INNOVATION CO., LTD.) 26 December 2019 (2019-12-26) paragraphs [0075]-[0077] | 1-8, 12-13 |
| X | JP 2001-155728 A (HITACHI METALS LTD) 08 June 2001 (2001-06-08) paragraphs [0007], [0013], [0015]-[0023], fig. 1-2 | 9-10, 12-13 |
| Y | | 11 |
| A | WO 2017/169129 A1 (PANASONIC IP MAN CO LTD) 05 October 2017 (2017-10-05) claims | 1-13 |
| A | JP 2012-238494 A (NGK INSULATORS LTD) 06 December 2012 (2012-12-06) claims | 1-13 |
| A | JP 2012-212669 A (NGK INSULATORS LTD) 01 November 2012 (2012-11-01) claims | 1-13 |

☑ Further documents are listed in the continuation of Box C.     ☑ See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | "X"  document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&"  document member of the same patent family |
| "P" | document published prior to the international filing date but later than the priority date claimed | |

| Date of the actual completion of the international search | Date of mailing of the international search report |
|---|---|
| **22 November 2021** | **07 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
| --- |
| **PCT/JP2021/034882** |

**C.      DOCUMENTS CONSIDERED TO BE RELEVANT**

| Category* | Citation of document, with indication, where appropriate, of the relevant passages | Relevant to claim No. |
| --- | --- | --- |
| A | JP 2002-373654 A (SHIN KOBE ELECTRIC MACH CO LTD) 26 December 2002 (2002-12-26)<br>           claims | 1-13 |

Form PCT/ISA/210 (second sheet) (January 2015)

**INTERNATIONAL SEARCH REPORT**
**Information on patent family members**

International application No.

**PCT/JP2021/034882**

| Patent document cited in search report | | | Publication date (day/month/year) | Patent family member(s) | | | Publication date (day/month/year) |
|---|---|---|---|---|---|---|---|
| JP | 2010-070427 | A | 02 April 2010 | (Family: none) | | | |
| US | 2019/0393479 | A1 | 26 December 2019 | KR | 10-2019-0143088 | A | |
| | | | | CN | 110620216 | A | |
| JP | 2001-155728 | A | 08 June 2001 | (Family: none) | | | |
| WO | 2017/169129 | A1 | 05 October 2017 | US | 2020/0295365 | A1 | |
| | | | | claims | | | |
| | | | | CN | 109075336 | A | |
| JP | 2012-238494 | A | 06 December 2012 | (Family: none) | | | |
| JP | 2012-212669 | A | 01 November 2012 | (Family: none) | | | |
| JP | 2002-373654 | A | 26 December 2002 | (Family: none) | | | |

Form PCT/ISA/210 (patent family annex) (January 2015)

**EP 4 231 375 A1**

**Patent documents cited in the description**

- JP 2006228733 A

- JP 2013065468 A